# EUROPÄISCHE PATENTANMELDUNG

(11) **EP 1 983 036 A1**
(43) Veröffentlichungstag der Anmeldung: **22.10.2008**
(21) Anmeldenummer: 08154021.3
(22) Anmeldetag: 03.04.2008
(51) Int. Cl.: C09J 7/02

(54) **Hitzereflektierendes Klebeband**

(30) Priorität: 17.04.2007 DE 102007018381
(71) Anmelder: tesa AG, 20253 Hamburg (DE)
(72) Erfinder: Pfaff, Dr. Ronald, 22335, Hamburg (DE); Kopf, Dr. Patrik, 22417, Hamburg (DE); Möller, Heike, 20353 Hamburg (DE)

(57) **Zusammenfassung**

Hitzereflektierendes Klebeband (1), vorzugsweise zum Umhüllen von langgestrecktem Gut wie insbesondere Leitungen oder Kabelsätze, mit einem bandförmigen Träger (2), der aus einem Verbund besteht aus mindestens einer ersten Schicht (2a), die von einem Glasgewebe mit einem Flächengewicht von 30 bis 200 g/m² gebildet wird, und mindestens einer zweiten Schicht (2b), die von einer metallischen Schicht mit einer Dicke von 10 bis 40 µm und einer thermischen Effektivität nach SAE J2302 bei 350 °C von größer 45 °C gebildet wird, und mit einer zumindest auf einer Seite des Trägers (2) aufgebrachten druckempfindlichen Klebebeschichtung (3), wobei die Biegesteifigkeit des Klebebands in Längs- und Querrichtung kleiner 500 mN, vorzugsweise kleiner 300 mN (gemessen mit einem Softometer KWS basic 2000 mN der Firma Wolf) ist.

## Beschreibung

Die Erfindung betrifft ein hitzereflektierendes Klebeband, vorzugsweise zum Umhüllen von langgestrecktem Gut wie insbesondere Leitungen oder Kabelsätze, mit einem bandförmigen Träger, der aus einem Verbund besteht aus mindestens einer ersten Schicht, die von einem Glasgewebe gebildet wird, und mindestens einer zweiten Schicht, die von einer metallischen Schicht gebildet wird, und mit einer zumindest auf einer Seite des Trägers aufgebrachten druckempfindlichen Klebebeschichtung. Des Weiteren betrifft die Erfindung die Verwendung des Klebebands sowie einen Kabelbaum, der mit dem erfindungsgemäßen Klebeband ummantelt ist.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.
Einen Schutz gegen Hitzestrahlung bieten derartige Klebebänder jedoch nicht.

Zum Nachweis der Erfüllung der bestehenden Anforderungen durch einen Werkstoff sind für elektrische Leitungen und weitere Komponenten für Kabelsätze verschiedene Prüfungen und Tests vorgeschrieben, die unter anderem in einer, unter verschiedenen PKW-Herstellern abgestimmten Werksnorm zusammengefasst sind (LV 112 - Niederspannungsleitungen für Kraftfahrzeuge, Fassung vom Juni 2004). Entsprechend dieser Norm muss der Isolationswerkstoff der Leitungen den Anforderungen der VDA 231-106 entsprechen. Die minimale und maximale Dauergebrauchstemperatur (T_{U} und T_{O}) für eine Beanspruchungsdauer von 3000 h liegen beispielsweise bei einer Einordnung in die Temperaturklasse B bei -40 °C und bei 100 °C, wobei das Material einer Kurzzeittemperatur (240 Stunden) von 125 ± 3 °C und einer Überlasttemperatur (6 Stunden) von 150 ± 3 °C standhalten muss.
Elektrische Leitungen und weitere Komponenten für Kabelsätze werden zur Festlegung ihrer maximalen Dauergebrauchstemperatur in Temperaturklassen eingeteilt. Diese Einteilung in Temperaturklassen ist allgemein bekannt und in der folgenden Tabelle nochmals aufgeschlüsselt dargestellt.

| Klasse | Dauer-gebrauchs-temperatur T_{U} bis T_{O} in °C | Kurzzeit-temperatur (T_{O} + 25) °C | Temperatur für thermische Überlast (T_{O} + 50) °C |
|---|---|---|---|
| A | - 40 bis 85 | 110 ± 2 | 136 ± 3 |
| B | - 40 bis 100 | 115 ± 3 | 150 ± 3 |
| C | - 40 bis 125 | 150 ± 3 | 175 ± 3 |
| D | - 40 bis 150 | 175 ± 3 | 200 ± 3 |
| E | - 40 bis 175 | 200 ± 3 | 225 ± 3 |
| F | - 40 bis 200 | 225 ± 4 | 250 ± 4 |
| G | - 40 bis 225 | 250 ± 4 | 275 ± 4 |
| H | - 40 bis 250 | 275 ± 4 | 300 ± 4 |

Der Schutz gegen Strahlungswärme erfolgt in der Regel durch Isolationsschichten mit einem geringen Wärmeleitvermögen. Bei Kabelsätzen wird zu diesem Zweck häufig auf temperaturbeständige Umhüllungen wie Wellrohre, Silikonschläuche oder metallarmierte Glasgewebeschläuche zurückgegriffen, die aber für höhere Belastungen keinen ausreichenden Schutz bieten.

Für Spezialanwendungen existieren darüber hinaus so genannte Hitzereflektionsbänder, bei denen es sich um Klebebänder der eingangs genannten Art handelt. Diese Bänder bestehen aus einem Glasfasergewebe (zweite Trägerschicht), das mit einer Aluminiumfolie (erste Trägerschicht) kaschiert und rückseitig mit einem hoch temperaturbeständigen Silikonklebstoff ausgerüstet ist. Derartige Produkte werden zum Beispiel von den Firmen Tyco und Aremco, New York, angeboten. Als Produktnachteile sind bei diesen Bändern jedoch die hohe Steifigkeit des Trägers sowie der im Vergleich zu konventionellen Klebebändern hohe Preis zu nennen.

Aus der EP 1 615 238 A1 ist ein thermisch isolierendes Klebeband zum Umhüllen von langgestrecktem Gut wie insbesondere Leitungen oder Kabelsätzen mit einem bandförmigen Träger bekannt. Der Träger besteht aus einem Verbund von mindestens einer ersten Schicht und mindestens einer zweiten Schicht, wobei die erste Schicht eine metallische Schicht ist. Auf einer Seite des Trägers ist eine druckempfindliche Klebebeschichtung aufgebracht. Die zweite Schicht des Trägers bildet eine bis zu einer Temperatur von mindestens 175 °C beständige Kunststofffolie oder ein bis zu einer Temperatur von mindestens 175 °C beständiges textiles Trägermaterial.

Derartige Klebebänder, auch "Heat Reflective-Klebebänder" genannt, sind bekannt. Da die Klebebänder für die thermische Reflektionswirkung mit Überlappung zum Beispiel um Kabel gewickelt werden, wirkt sich die Steifigkeit der bekannten Klebebänder, die insbesondere auch auf die verwendeten dicken Metallschichten zurückzuführen ist, besonders negativ aus.
Weiterhin ist die Abrollkraft der Klebebänder hoch, was einen erhöhten Wickeldruck zur Folge hat und der Kabelsatz besonders wenig flexibel wird und nachteiligen Eigenschaften für den Transport und Einbau zeigt.
Der dadurch resultierende langsamere Wickelprozess führt zu höheren Kosten.

Darüber hinaus sind aluminisierte oder aluminiumkaschierte Geflechtsschläuche (beispielsweise von der Firma Bentley Harris) bekannt, ergeben aber bei Anwendung ebenfalls einen sehr gering flexiblen Kabelsatz.

Als Methode, die Abriebbeständigkeit von Schutzsystemen in der Fahrzeugelektrik zu bestimmen, hat sich die internationale Norm ISO 6722, Kapitel 9.3 "Scrape abrasion test" (Ausgabe April 2002), etabliert. Hier wird der Prüfling (zum Beispiel die isolierte Kupferleitung oder aber das auf einen Metalldorn geklebte Wickelband) mit einem dünnen Stahldraht unter definierten Hubgeometrien und Gewichtsbelastung beansprucht, bis die Schutzhülle durchgerieben ist und es über einen Kurzschluss zum Stoppen des mitlaufenden Zählwerkes kommt.

Sofern nicht anders angegeben, beziehen sich alle Angaben zur Abriebfestigkeit auf diese ISO 6722-Methode. Das Klebeband wird dazu einlagig in Längsrichtung auf einem Metalldorn von 10 mm Durchmesser geklebt, die Scheuerbewegung findet mittig auf dem Klebeband mit einer Gewichtsbelastung von 7 N statt. Als Reibkörper wird ein Stahldraht gemäß ISO 8458-2 von 0,45 mm Durchmesser verwendet. Als Maßzahl für die Abriebfestigkeit wird die Anzahl der Hübe bis zum Kurzschluss angegeben. In Fällen von sehr hohen Scheuerbeständigkeiten kann über Erhöhung der Auflagemasse eine Verkürzung der Messzeit und Reduzierung der Hubzahl erreicht werden. Hierbei hat sich ein Auflagegewicht von 10 N als günstig erwiesen.

Die physikalische Messung der Geräuschdämpfungswirkung erfolgt gemäß der Methode, wie sie in DE 100 39 982 A1 detailliert beschrieben wird. Es handelt sich hierbei um eine in der Automobilindustrie etablierte Messmethodik, wie sie beispielsweise auch in der BMW-Norm GS 95008-3 (Ausgabe Mai 2000) angegeben wird.

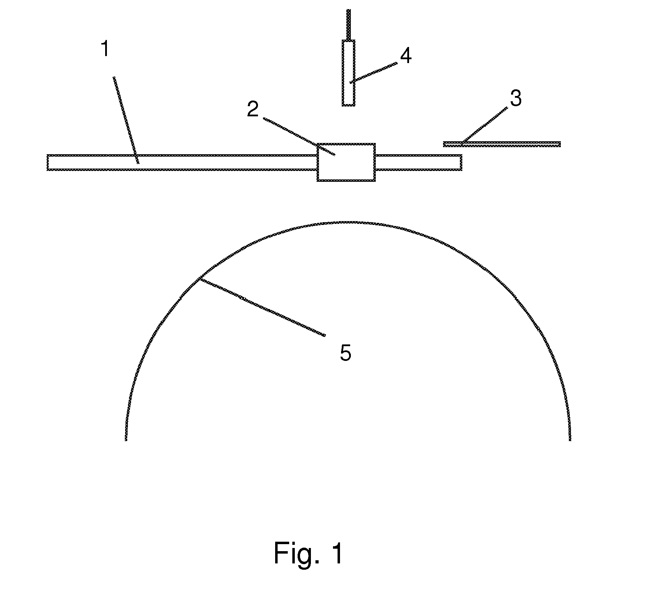

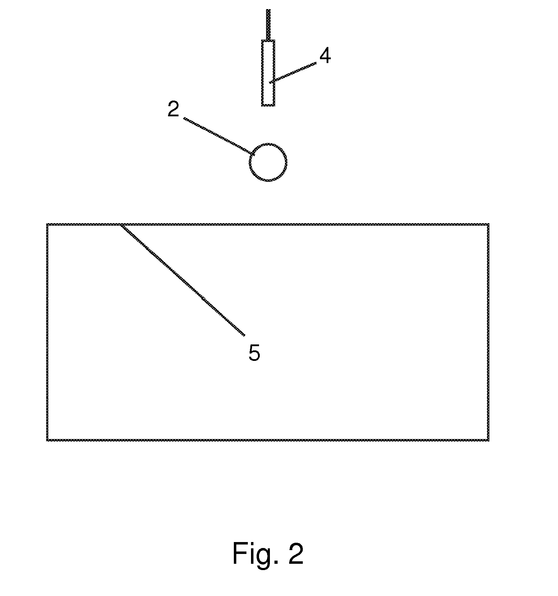

Im Folgenden wird in Verbindung mit den Figuren 1 und 2 das Messverfahren nach der BMW-Norm GS 95008-3 aus Mai 2000 ausführlich dargelegt.

Es zeigen
- Figur 1: den Aufbau der Messvorrichtung in der seitlichen Ansicht und
- Figur 2: denselben Aufbau in der horizontalen Ansicht.

Bei dieser Meßmethode wird ein definierter Stahlstab 1 mit 8 mm Durchmesser derartig mit dem Prüfling 2 - sprich Klebeband - umwickelt, dass sich Hebellängen von 220 mm und 150 mm ergeben. Der umwickelte Stahlstab 1 wird bis zur Arretierung 3 auf die Fallhöhe und mit einem Gewicht von ca. 16 g auf ein Aluminiumblech 5 fallen gelassen. Das Aluminiumblech 5, das im unverformten Zustand 350 x 190 x 0,3 [mm] misst, wird halbtonnenförmig unter dem Prüfling 2 angeordnet, so dass sich eine Weite von 290 mm ergibt.
Das Gesamtschallergebnis wird mittels eines über der Prüfanordnung befindlichen Mikrofons 4 in einem Frequenzbereich von beispielsweise 20 bis 12.500 Hz mit einem handelsüblichen Schallmessgerät, beispielsweise Typ 2226 der Firma Bruel & Kjaer erfasst und aufgezeichnet. Für das menschliche Ohr als besonders relevant sind Frequenzen im Bereich von 2.000 bis 5.000 Hz.
Die Dämpfung wird als Differenz zwischen Nullwert mit nicht-umwickeltem Stahlstab sowie dem jeweiligen Messwert in dB(A) angegeben.

Aufgabe der Erfindung ist es, ein hitzereflektierendes Klebeband zur Verfügung zu stellen, das bei der Ummantelung von beispielsweise Kabeln neben der hohen Hitzereflektion gleichzeitig ein ummanteltes Produkt, also in diesem Fall Kabelbaum, gewährleistet, das flexibler ist als die bisherigen Produkte, die mit den bekannten Klebebändern ummantelt worden sind.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Klebebands sowie ein mit dem Klebeband ummantelter Kabelbaum vom Erfindungsgedanken umfasst.

Demgemäß betrifft die Erfindung ein hitzereflektierendes Klebeband, vorzugsweise zum Umhüllen von langgestrecktem Gut wie insbesondere Leitungen oder Kabelsätze, mit einem bandförmigen Träger, der aus einem Verbund besteht aus mindestens einer ersten Schicht, die von einem Glasgewebe mit einem Flächengewicht von 30 bis 200 g/m² gebildet wird, und mindestens einer zweiten Schicht, die von einer metallischen Schicht mit einer Dicke von 10 bis 40 µm und einer thermischen Effektivität nach SAE J2302 bei 350 °C von größer 45 °C gebildet wird, und mit einer zumindest auf einer Seite des Trägers aufgebrachten druckempfindlichen Klebebeschichtung.
Die Biegesteifigkeit des Klebebands in Längs- und Querrichtung ist kleiner 500 mN, vorzugsweise kleiner 300 mN (gemessen mit einem Softometer KWS basic 2000 mN der Firma Wolf).

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Gemäß einer vorteilhaften Ausführungsform der Erfindung ist die Klebebeschichtung auf der offenen, der zweiten Schicht gegenüberliegenden Seite der ersten Schicht aufgebracht.

Weiter vorzugsweise ist auf der offenen, der ersten Schicht gegenüberliegenden Seite der zweiten Schicht eine Silikonisierung mit besonders vorzugsweise 0,5 g/m² bis 1,5 g/m², ganz besonders vorzugsweise 1 g/m² aufgebracht, insbesondere aus Polysiloxan.
Diese Silikontrennlack-Beschichtung ermöglicht ein sehr leichtes und gleichmäßiges Abrollen des erfindungsgemäßen Klebebands bei der Anwendung. Hierdurch ergibt sich der Vorteil, dass auf die Verwendung eines Trennpapiers beziehungsweise einer Trennfolie verzichtet werden kann.
Als Beschichtung eignen sich die üblichen Polysiloxan-Trennlackbeschichtung zum Beispiel von der Firma Wacker, Rhodia oder Dow Corning. Geeignet sind Beschichtungen auf Lösemittelbasis, Emulsionsbasis oder 100%-Systeme. Diese Polysiloxan-Beschichtungen sind üblicherweise durch eine Additions- oder durch eine Kondensationsreaktion vernetzt. Vorteilhafterweise wird ein sehr leicht trennendes Polysiloxan-System für die Beschichtung verwendet.

Die Biegesteifigkeit des Trägers und damit des Klebebands ist gemäß einer weiteren vorteilhaften Ausführungsform der Erfindung in Längsrichtung kleiner 230 mN und in Querrichtung kleiner 150 mN (gemessen mit einem Softometer KWS basic 2000 mN der Firma Wolf).

Das Glasgewebe der ersten Schicht weist vorteilhaft folgende Eigenschaften auf:
- Das Flächengewicht beträgt von 80 bis 120 g/m².
- Die Anzahl der Fäden in Längs- und Querrichtung beträgt jeweils 3 bis 10 Fäden/cm, und/oder
- die zur Bildung des Glasgewebes verwendeten Fäden weisen einen Titer von kleiner 150 tex, vorzugsweise kleiner 100 tex auf.

Gemäß einer weiteren vorteilhaften Ausführungsform der Erfindung weist die metallische Schicht eine Dicke von 12 bis 20 µm auf. Gegebenenfalls weist dies darüber hinaus eine Prägung auf.

Als Metalle können gewählt werden Silber, Kupfer, Gold, Platin, Aluminium und Aluminiumverbindungen, Zinn, Nichrom, NIROSTA, Titan, Metalloxide wie Cadmiumoxide, Zinnoxide, Zinkoxide, Magnesiumoxide, vorzugsweise Aluminium. Diese Aufzählung ist dabei als nicht abschließend zu betrachten, sondern der Fachmann kann weitere hier nicht explizit genannte Metallschichten wählen, ohne den Erfindungsgedanken zu verlassen.

Um aus dem Träger ein Selbstklebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.
Das Auftragsgewicht bewegt sich im Bereich zwischen 20 bis 100 g/m².
Als Beschichtungstechnologie kommen bekannte Systeme zum Zuge, wobei sich Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.
Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.
Die Klebemasse auf Acrylathotmelt-Basis kann UV-vernetzt werden. Andere Vernetzungsarten sind aber auch möglich, zum Beispiel die Elektronenstrahlenvernetzung.
In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Vorzugsweise besteht also die Klebebeschichtung aus einer acrylat- oder silikonhaltigen Klebemasse.

Die Klebemasse kann in Längsrichtung des Klebebands in Form eines Streifens aufgebracht sein, der eine geringere Breite aufweist als der Träger des Klebebands.

Der beschichtete Streifen hat in einer vorteilhaften Ausführungsform eine Breite von 10 bis 80% der Breite des Trägermaterials. Besonders vorzugsweise erfolgt der Einsatz von Streifen mit einer Beschichtung von 20 bis 50% der Breite des Trägermaterials.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.

Des Weiteren können die erste Schicht und/oder die Klebebeschichtung beispielsweise mit Hilfe eines aus Ammoniumpolyphosphat, Magnesiumhydroxid und/oder Aluminiumhydroxid bestehenden Flammschutzmittels oder mit Hilfe eines Chlorparaffins, gegebenenfalls in Kombination mit Antimontrioxid, flammhemmend ausgerüstet sein.

Das Klebeband kann vorzugsweise eine Abriebbeständigkeit nach ISO 6722 bei einlagiger Messung aufweisen, nach der eine Anzahl von Hüben von mehr als 500, insbesondere von 800 bis 2500, überstanden werden.

Dann kann das Klebeband eine Geräuschdämpfung nach BMW GS 95008-3 bei einlagiger Messung von mehr als 3 dB (A), insbesondere 5 dB (A) bis 6 dB (A), aufweisen.

Das Klebeband ist vorzugsweise zumindest in Querrichtung von Hand einreißbar.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.

Schließlich ist vom Erfindungsgedanken auch ein langgestrecktes Gut wie insbesondere ein Kabelsatz umfasst, ummantelt mit dem erfindungsgemäßen Klebeband.

Anhand der nachfolgend beschriebenen Figuren wird das erfindungsgemäße Klebeband in einer besonders vorteilhaften Ausführungsform näher erläutert, ohne hiermit die Erfindung einschränken zu wollen.

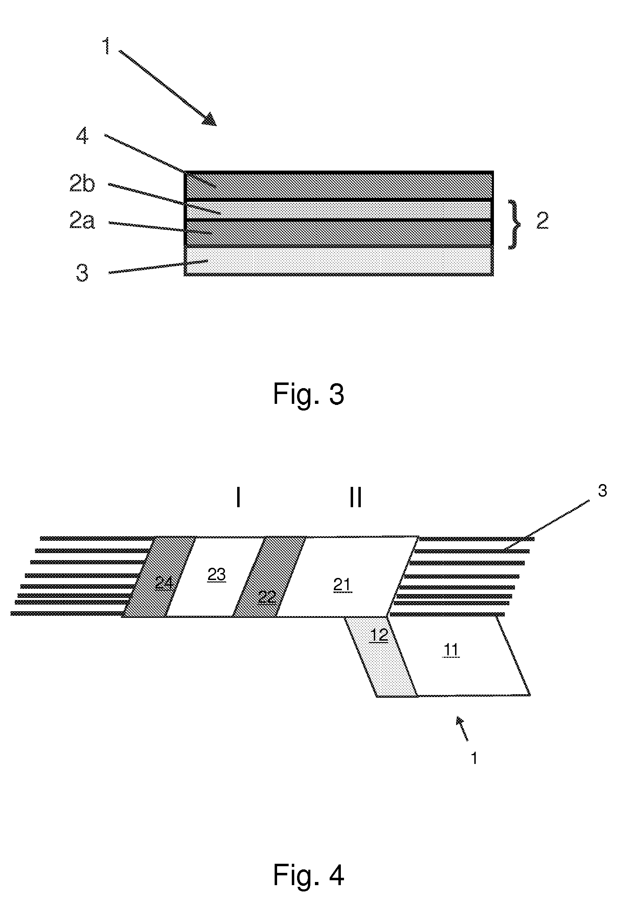

Es zeigen
- Figur 3: das erfindungsgemäße Klebeband im seitlichen Schnitt,
- Figur 4: die Verwendung des erfindungemäßen Klebebands in einer anderen Ausführungsform beim Ummanteln von Kabeln, sprich einen Kabelbaum.

Nach Figur 3 umfasst ein erfindungsgemäßes hitzereflektierendes Klebeband (1), einen bandförmigen Träger (2), der aus einem Verbund besteht aus mindestens einer ersten Schicht (2a), die von einem Glasgewebe mit einem Flächengewicht von 30 bis 200 g/m² gebildet wird, und mindestens einer zweiten Schicht (2b), die von einer metallischen Schicht mit einer Dicke von 10 bis 40 µm und einer thermischen Effektivität nach SAE J2302 bei 350 °C von größer 45 °C gebildet wird.
Auf einer Seite des Trägers (2) ist eine druckempfindliche Klebebeschichtung (3) aufgebracht.
Auf der offenen, der ersten Schicht (2a) gegenüberliegenden Seite der zweiten Schicht (2b) ist eine Silikonisierung (4) aufgebracht.

In der Figur 4 ist ein Ausschnitt eines Kabelbaums gezeigt, der sich aus einer Bündelung von einzelnen Kabeln 7 zusammensetzt und der mit dem erfindungsgemäßen Klebeband 1 ummantelt ist. Das Klebeband 1 wird in einer spiralförmigen Bewegung um den Kabelbaum geführt.
Der gezeigte Ausschnitt des Kabelbaums zeigt zwei Wicklungen I und II des Klebebands 1. Nach links hin würden sich würden weitere Wicklungen erstrecken, diese sind hier nicht dargestellt.
Das Trägermaterial 11, 21, 23 ist einseitig mit einer Klebemasse 12, 22, 24 beschichtet, wobei der Auftrag in Form eines Streifens in Längsrichtung erfolgt, der eine geringere Breite aufweist als das Trägermaterial 11, 21, 23 des Klebebands 1.

Die Ummantelung des Kabelbaums erfolgt derartig, dass der Streifen der Klebemasse 12, 22, 24 vollständig auf dem Trägermaterial 11, 21, 23 des Klebebands 1 verklebt. Eine Verklebung mit den Kabeln 7 ist ausgeschlossen.
Das Klebeband 1 umfasst (siehe Wicklung 1) in der Breite den Abschnitt 24 und den Anschnitt 22 sowie den dazwischen befindlichen offenen Träger 23. Der Abschnitt 22, der zur Wicklung II gehört, haftet also auf dem Abschnitt 23. (Der Abschnitt 24 würde auf dem Träger der nächsten linksliegenden Wicklung haften.) Die Abschnitte 22, 24 sind im Gegensatz zur offen liegenden Klebemasse 12 von außen nicht sichtbar, weshalb die dichtere Schraffur zur Darstellung gewählt ist.

Überraschend und für den Fachmann unerwartet zeigt das erfindungsgemäße Klebeband das Merkmal, trotz der gegenüber den bekannten Bändern sehr viel dünneren Metallschicht hervorragend die Hitze zu reflektieren.
Gleichzeitig ist die dünne Metallschicht auch dafür verantwortlich, dass das Klebeband zu weitaus flexibleren Produkten führt, wenn diese mit dem Klebeband ummantelt sind.

Dies zeigen auch folgende vergleichende Messungen.

Folgende Materialien sind untersucht worden:
- 14 µm Aluminiumfolie
- 14 µm Aluminiumfolie geprägt
- 50 µm Aluminiumfolie (Stand der Technik)
- dünnes Glasgewebe (100 g/m²) mit einer 17 µm Aluminiumfolie (Sample 1 genannt)
- dünnes Glasgewebe (100 g/m²) mit einer 40 µm Aluminiumfolie (Sample 2 genannt)
- dickes Glasgewebe (330 g/m²) mit einer 40 µm Aluminiumfolie (Sample 3 genannt und Stand der Technik)

Die Folien wurden separat und als Verbund mit Glasgewebe analog der SAE J2302 gemessen.

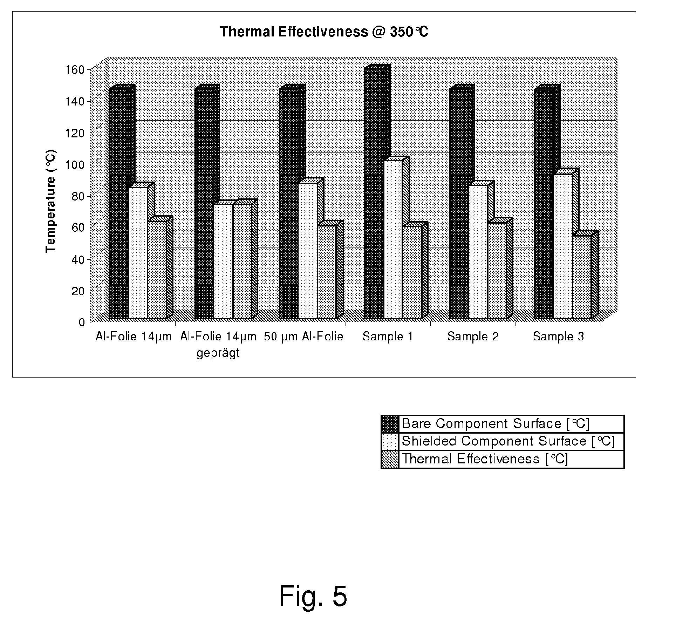

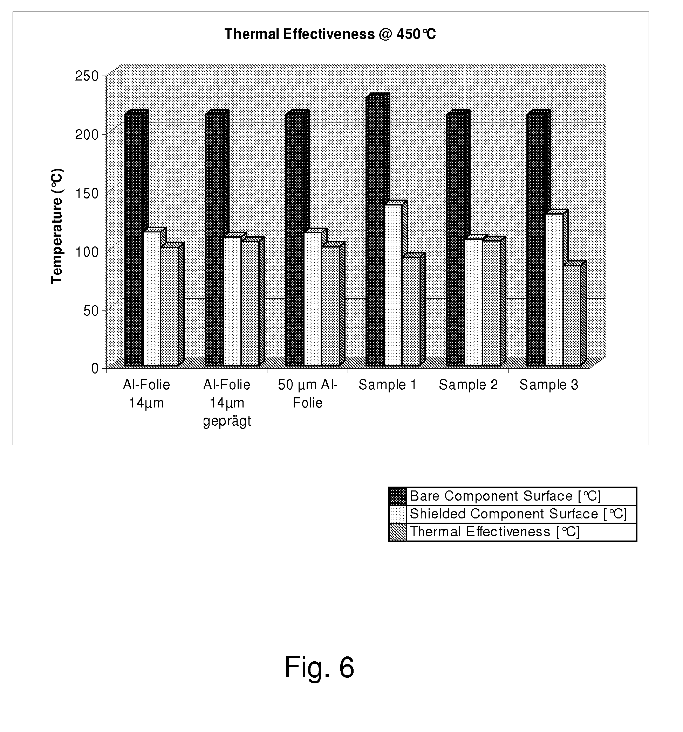

In der Figur 5 ist das Ergebnis der Hitzereflektion "Thermal Effectiveness" bei 350 °C gezeigt, in der Figur 6 bei 450 °C.

Die drei von links nach rechts angeordneten Balken haben die folgende Bedeutung:

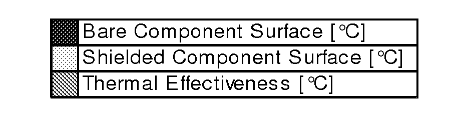

| | |
|---|---|
| Links (blau): | Temperatur am Keramikstab ohne Tape |
| Mitte (gelb): | Temperatur auf der Außenseite vom Tape |
| Rechts (orange): | Hitzereflektionsvermögen "Thermal Effectiveness" |

Es zeigt sich, dass die erfindungsgemäß eingesetzten Folie beziehungsweise der erfindungsgemäß eingesetzte Träger gegenüber den bekannten in der Leistungsfähigkeit nicht abfallen, obwohl die Metallbeschichtung sehr viel dünner ist.

Die Überlegenheit des erfindungsgemäßen Klebebands zeigt sich bei der Messung der Biegesteifigkeit, die den Einfluss der Aluminiumfolie auf die Flexibilität zeigt.

**Tabelle 1 zeigt die Biegesteifigkeiten (BS) der einzelnen Materialien.**

| | **BS längs** | **BS quer** |
|---|---|---|
| **Muster** | **mN** | **mN** |
| **Sample 1** | 229 | 148 |
| **Sample 2** | 498 | 295 |
| **Sample 3** | 917 | 216 |
| **Al-Folie 50µm** | 225 | - |
| **Al-Folie 13µm** | 5 | - |
| **Al-Folie 13µm geprägt** | 6 | - |
| **WB-Muster 1** | 352 | 558 |

Die Biegesteifigkeit ist ein Maß für die Flexibilität eines Trägers oder eines Trägerverbundes.

Eine handelsübliche Aluminiumfolie hat eine Biegesteifigkeit von 3 mN. Es handelt sich also um ein sehr flexibles Material. Eine 50 µm Aluminiumfolie dagegen verfügt über eine Biegesteifigkeit von 225 mN.
Die Biegesteifigkeit steigt also überproportional mit der Dicke der Folie.

Das gleiche Glasgewebe kaschiert mit einer 17 µm Al-Folie weist eine Biegesteifigkeit von 229 mN auf, kaschiert mit einer 40 µm Al-Folie eine Biegesteifigkeit von fast 500 mN und mit einem dicken Glasgewebe sogar über 900 mN.

Um ein flexibles Klebeband mit einem guten Hitzereflektionsvermögen zu erhalten, kann eine sehr dünne Aluminiumfolie zur Kaschierung des Glasgewebes gewählt werden.

Das erfindungsgemäße Klebeband ist mit geringem Aufwand herstellbar, ergibt ein preisgünstiges Hitzeschutzband und erfüllt sodann die Anforderung an Dauergebrauchstemperaturen bis Klasse F (200 °C) nach SAE J 2192 oder anderen einschlägigen Spezifikationen, beispielsweise der Fiat Auto Normazione "Procurement Specification", 9.91220 vom 19. Dezember 2001, Kapitel 2.4.1 Flexibility test.

## Patentansprüche

1. Hitzereflektierendes Klebeband (1), vorzugsweise zum Umhüllen von langgestrecktem Gut wie insbesondere Leitungen oder Kabelsätze, mit einem bandförmigen Träger (2), der aus einem Verbund besteht aus mindestens einer ersten Schicht (2a), die von einem Glasgewebe mit einem Flächengewicht von 30 bis 200 g/m² gebildet wird, und mindestens einer zweiten Schicht (2b), die von einer metallischen Schicht mit einer Dicke von 10 bis 40 µm und einer thermischen Effektivität nach SAE J2302 bei 350 °C von größer 45 °C gebildet wird, und mit einer zumindest auf einer Seite des Trägers (2) aufgebrachten druckempfindlichen Klebebeschichtung (3), wobei die Biegesteifigkeit des Klebebands in Längs- und Querrichtung kleiner 500 mN, vorzugsweise kleiner 300 mN (gemessen mit einem Softometer KWS basic 2000 mN der Firma Wolf) ist.

2. Hitzereflektierendes Klebeband nach Anspruch 1,
**dadurch gekennzeichnet, dass**
die Klebebeschichtung (3) auf der offenen, der zweiten Schicht (2b) gegenüberliegenden Seite der ersten Schicht (2a) aufgebracht ist.

3. Hitzereflektierendes Klebeband nach Anspruch 1 oder 2,
**dadurch gekennzeichnet, dass**
auf der offenen, der ersten Schicht (2a) gegenüberliegenden Seite der zweiten Schicht (2b) eine Silikonisierung (4) mit vorzugsweise 0,5 g/m² bis 1,5 g/m², besonders vorzugsweise 1 g/m² aufgebracht ist.

4. Hitzereflektierendes Klebeband nach zumindest einem der Ansprüche 1 bis 3,
**dadurch gekennzeichnet, dass**
die Biegesteifigkeit des Klebebands in Längsrichtung kleiner 230 mN und in Querrichtung kleiner 150 mN (gemessen mit einem Softometer KWS basic 2000 mN der Firma Wolf) ist.

5. Hitzereflektierendes Klebeband nach zumindest einem der vorherigen Ansprüche,
**dadurch gekennzeichnet, dass**
das Glasgewebe der ersten Schicht (2a) folgende Eigenschaften aufweist:
ein Flächengewicht von 80 bis 120 g/m²,
die Anzahl der Fäden in Längs- und Querrichtung jeweils 3 bis 10 Fäden/cm beträgt, und/oder
die zur Bildung des Glasgewebes verwendeten Fäden einen Titer von kleiner 150 tex, vorzugsweise kleiner 100 tex aufweisen.

6. Hitzereflektierendes Klebeband nach zumindest einem der vorherigen Ansprüche,
**dadurch gekennzeichnet, dass**
die metallische Schicht (2b) eine Dicke von 12 bis 20 µm aufweist.

7. Hitzereflektierendes Klebeband nach zumindest einem der vorherigen Ansprüche,
**dadurch gekennzeichnet, dass**
die metallische Schicht (2b) aus Aluminium besteht.

8. Hitzereflektierendes Klebeband nach zumindest einem der vorherigen Ansprüche,
**dadurch gekennzeichnet, dass**
die Klebebeschichtung aus einer acrylat- oder silikonhaltigen Klebemasse besteht.

9. Hitzereflektierendes Klebeband nach zumindest einem der vorherigen Ansprüche,
**dadurch gekennzeichnet, dass**
die erste Schicht (2a) und/oder die Klebebeschichtung (3) beispielsweise mit Hilfe eines aus Ammoniumpolyphosphat, Magnesiumhydroxid und/oder Aluminiumhydroxid bestehenden Flammschutzmittels oder mit Hilfe eines Chlorparaffins, gegebenenfalls in Kombination mit Antimontrioxid, flammhemmend ausgerüstet ist.

10. Hitzereflektierendes Klebeband nach zumindest einem der vorherigen Ansprüche,
**dadurch gekennzeichnet, dass**
das Klebeband eine Abriebbeständigkeit nach ISO 6722 bei einlagiger Messung aufweist, nach der eine Anzahl von Hüben von mehr als 500, insbesondere von 800 bis 2500, überstanden werden.

11. Hitzereflektierendes Klebeband nach zumindest einem der vorherigen Ansprüche,
**dadurch gekennzeichnet, dass**
das Klebeband eine Geräuschdämpfung nach BMW GS 95008-3 bei einlagiger Messung von mehr als 3 dB (A), insbesondere 5 dB (A) bis 6 dB (A), aufweist.

12. Verwendung eines Klebebands nach zumindest einem der vorherigen Ansprüche zum Ummanteln von langgestrecktem Gut, wie insbesondere Kabelsätzen, wobei das langgestreckte Gut in axialer Richtung von dem Klebeband umhüllt wird oder das Klebeband in einer schraubenförmigen Spirale um das langgestreckte Gut geführt wird.

13. Langgestrecktes Gut, wie insbesondere ein Kabelsatz, ummantelt mit einem Klebeband nach zumindest einem der vorherigen Ansprüche.
